**Europäisches Patentamt**

**European Patent Office**

**Office européen des brevets**

(19)

(11) Numéro de publication: **0 114 142**
**A1**

## (12) DEMANDE DE BREVET EUROPEEN

(21) Numéro de dépôt: **84400086.9**

(22) Date de dépôt: **17.01.84**

(51) Int. Cl.³: **G 09 B 9/06**

(30) Priorité: **18.01.83 FR 8300670**

(43) Date de publication de la demande: **25.07.84**
**Bulletin 84/30**

(84) Etats contractants désignés: **DE GB IT NL**

(71) Demandeur: **Berger, Pierre, La Mole, F-83310 Cogolin (FR)**

(72) Inventeur: **Berger, Pierre, La Mole, F-83310 Cogolin (FR)**

(54) **Simulateur de planche à voile.**

(57) La présente invention concerne les simulateurs de planche à voile. Le simulateur comprend un socle (1) formant réceptacle (2), un plateau (4) situé sur le socle, le plateau comportant des moyens pour recevoir un mât de voile (22).

Ce simulateur comprend, de plus, des moyens de support et de roulement (13, 14, 10, 11), du plateau par rapport au socle autour d'un axe, et des moyens pour freiner la rotation (16, 17) du plateau par rapport au socle par friction d'un élément solide par rapport à un corps ayant un coefficient de viscosité déterminé.

Application à l'apprentissage de la planche à voile par simulation.

1.

## SIMULATEUR DE PLANCHE A VOILE

La présente invention concerne les simulateurs de planche à voile. On sait qu'un simulateur de planche à voile est un dispositif qui permet à sec d'apprendre à manipuler les engins de sport que l'on dénomme "planche à voile", tout en restant sur le sol. Il existe de nombreux dispositifs de simulation permettant d'apprendre à des néophytes les manipulations d'une planche à voile. Le demandeur a notamment déposé des brevets sur de tels dispositifs.

Ces dispositifs donnent entière satisfaction, car ils reproduisent parfaitement tous les mouvements possibles que l'on trouve avec une planche à voile quand elle est dans son élément liquide.

Cependant si ces dispositifs donnent d'excellents résultats, ils sont généralement d'un prix de revient qui en font des instruments onéreux et qui en limitent l'application et l'utilisation.

La présente invention a pour but de réaliser un simulateur de planche à voile donnant l'essentiel des mouvements auxquels on est soumis lorsque l'on est sur une planche à voile, mais dont la structure et la réalisation permettent d'en faire des dispositifs peu onéreux et donc accessibles à un plus grand nombre de personnes. Plus précisément, la présente invention a pour objet :

- un simulateur de planche à voile comportant un socle formant réceptacle,

- un plateau situé au dessus dudit socle, ledit plateau comportant des moyens pour recevoir un mât de voile,

- des moyens de support et de roulement dudit plateau par rapport audit socle autour d'un axe, et,

- des moyens pour freiner la rotation dudit plateau par rapport audit socle, par friction d'un élément solide par rapport au corps ayant un coefficient de viscosité déterminé.

D'autres caractéristiques et avantages de la présente invention apparaitront au cours de la description suivante donnée en regard des dessins annexés à titre illustratif, mais nullement limitatif

2.

*dans lesquels*

*- les figures 1 et 2 représentent, en deux vues perpendiculaires, un premier mode de réalisation d'un simulateur de planche à voile selon l'invention,*

*- les figures 3, 4 et 5 représentent respectivement un deuxième, troisième et quatrième mode de réalisation d'un simulateur de planche à voile conforme à l'invention.*

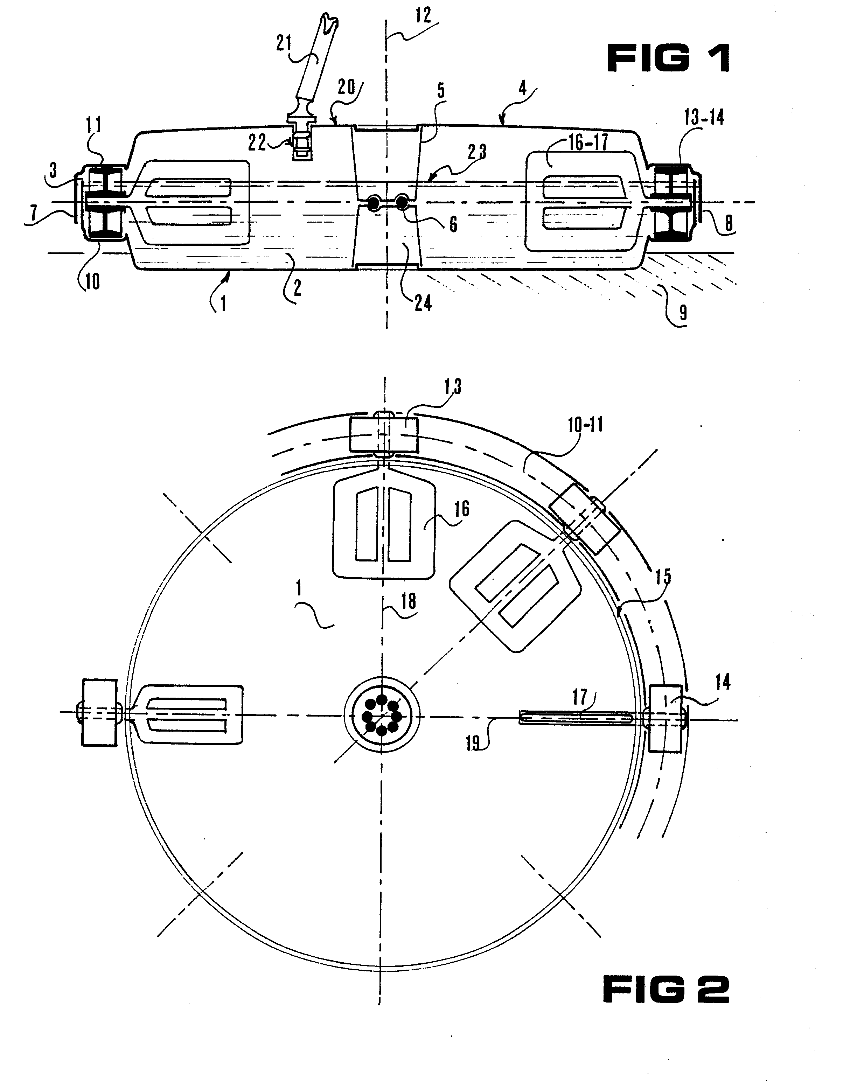

*Les figures 1 et 2 représentent un même mode de réalisation suivant deux vues perpendiculaires d'un simulateur de planche à voile qui comporte un socle 1 en forme de réceptacle 2 pouvant contenir, une certaine quantité de fluide ayant un coefficient de viscosité déterminé, comme par exemple de l'eau. La quantité minimale de fluide que peut contenir ce réceptacle 2 est déterminé par son niveau supérieur pouvant aller jusqu'au bord supérieur 3.*

*Le simulateur comporte, en outre, un plateau 4 comportant un pilier central 5 coopérant avec une embase 24, solidaire du fond du réceptacle 2 au moyen par exemple d'un roulement à billes 6. Le diamètre hors-tout de ce plateau 4 est supérieur au diamètre hors-tout du réceptacle de façon que le bord inférieur 7 recouvre le bord 3 du socle 1 et descende à un niveau 8 inférieur au niveau du bord 3 quand le socle 1 est posé sur un sol 9.*

*Les deux bords latéraux horizontaux 10, 11 respectivement du socle 1 et du plateau 4 constituent des chemins de roulement circulaires de révolution centrés sur l'axe 12 et situés respectivement dans deux plans perpendiculaires à l'axe 12.*

*Entre ce socle 1 et le plateau 4 sont disposés une pluralité de galets 13, 14... roulant simultanément sur ces deux chemins de roulement 10 et 11 ce qui a pour but de maintenir et supporter les bords du plateau 4 par rapport au socle 1. L'ensemble de ces galets 13, 14 dont seulement 4 ont été illustrés sur la figure 2 sont liés entre eux par un châssis 15 pour les maintenir les uns par rapport aux autres à distance sensiblement constante et de plus, les garder constamment, sur les deux chemins de roulement*

3.

10 et 11. Ce châssis 15 est constitué de préférence par une armature solide tubulaire où si les chemins de roulement 10 et 11 permettent par leur configuration, par exemple en forme de cuvette de maintenir ces galets sur ceux-ci, par des sangles en matériau relativement souple.

Il est à noter que le bord supérieur 3 du socle 1 est à un niveau supérieur du chemin de roulement. 10, mais néanmoins leur hauteur est légèrement inférieure au diamètre des galets 13, 14, afin que lorsque le plateau 4 est entraîné en rotation autour de l'axe 12, le chemin de roulement 11 puisse venir sans obstacle au contact des tranches cylindriques de révolution des galets 13, 14 et donc de pouvoir tourner par rapport au socle 1 sans frotter sur le sommet supérieur du bord 3.

Le simulateur comporte en plus solidaire avantageusement de chaque galet suivant leur axe de rotation, des palettes 16, 17 etc... de façon que lorsque les galets sont animés du mouvement de rotation par la rotation du plateau, par rapport au socle 1, la palette pivote d'une même rotation autour respectivement des axes 18, 19 etc... de rotation des galets 13, 14, c'est-à-dire en fait autour d'axes perpendiculaires à l'axe 12 de rotation du plateau 4 par rapport au socle 1.

Le plateau 4 comporte sur sa surface supérieure extérieure 20 des moyens pour qu'un utilisateur potentiel puisse poser ses pieds et des moyens de support d'un mât de voile comme il apparaît en partie 21 dans un logement 22 réalisé dans le plateau 4.

Le mode de réalisation de simulateur décrit ci-dessus fonctionne de la façon suivante :

- Tout d'abord, on remplit le réceptacle 2 du socle 1 avec par exemple de l'eau pouvant atteindre le niveau 23 supérieur déterminé par le niveau supérieur du bord 3.

- Lorsque l'utilisateur monte sur le plateau 4 et maintien un gréement de voile d'une planche à voile et plus particulièrement le "wishbone", sous l'action du vent, le plateau 4 est animé d'une rotation autour de l'axe 12, le pivotement par rapport au socle 1 entraîne en rotation les galets 13, 14 qui se déplacent sur les chemins de roulement 10, 11. Dans leurs mouvements de rotation, les galets entraînent, dans le même mouvement, la rotation des palettes 16 et 17 qui alors "barbotent" en totalité ou partiellement en fonction de leur largueur et du niveau 23 du fluide, dans ce fluide, en l'occurrence de l'eau.- Cette rotation a pour conséquence de freiner la rotation du plateau 4 par rapport au socle 1 fixe puisque posé sur le sol 9.

Ce "barbotage" des palettes 16, 17 dans le liquide permet donc un freinage du type hydraulique du plateau 4 par rapport au socle 1 qui est sensiblement équivalent au freinage se qui produit sur une planche à voile lorsqu'elle est dans son élément naturel, c'est-à-dire sur l'eau.

On voit donc que ce simulateur de planche à voile est d'une réalisation simple et peu onéreuse tout en donnant néanmoins une aussi bonne image des mouvements réels, et que l'on peut trouver sur une planche à voile quand elle est sur l'eau.

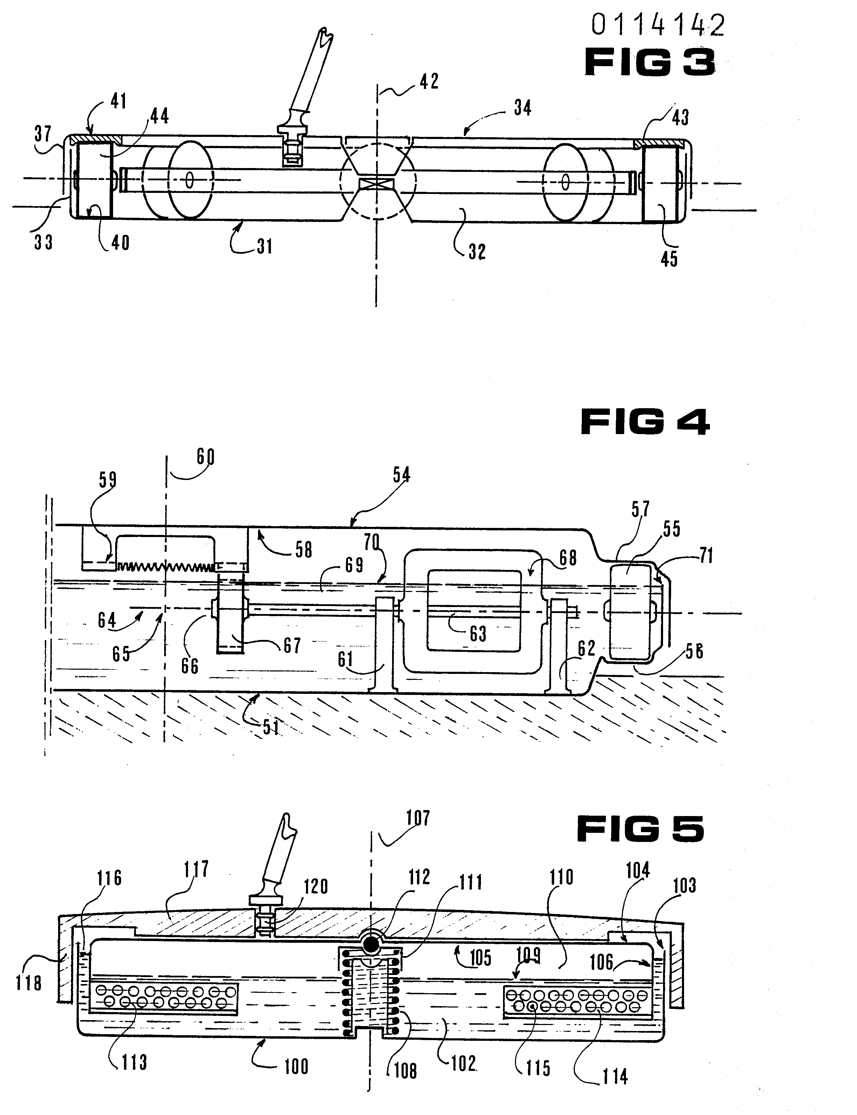

La figure 3 représente un deuxième mode de réalisation de planche à voile dans une vue en coupe longitudinale, cette seule vue étant assez explicité en elle même pour comprendre sa structure entière. Ce simulateur comporte un socle 31 formant réceptable 32, sur lequel est disposé un plateau 34 dont le bord 37 recouvre extérieurement le bort 33 du socle 31.

Le socle 31 et le plateau 34 comportent respectivement, comme dans le mode de réalisation précédent, des chemins de roulement 40 et 41 circulaires et de révolution centrés sur l'axe 42. Cependant dans ce mode de réalisation, le fluide visqueux permettant le freinage, est remplacé par au moins une bande 43 placée sur l'un ou l'autre des deux chemins de roulement avantageusement le chemin de roulement supérieur 41, cette bande étant réalisé dans un matériau ayant un coefficient de viscosité et éventuellement déformation non négligeable, ce matériau peut être par exemple un élastomère.

5.

Dans ces conditions, lorsqu'un usager se positionne sur le plateau 34 et que le plateau subit des mouvements de rotation identiques à ceux décrits en regard du premier mode de réalisation, les galets 44, 45 etc... (les galets ayant la même structure de coopération, comme celle qui est illustrée sur la figure 2) roulent respectivement sur les deux chemins de roulement 40 et 41. Cependant du fait de la déformation de la bande de roulement 43, les galets pénètrent dans ce matérieu pour la déformer et les déformations (par écrasement) constituent un frein à la rotation de ces galets et donc de la rotation du plateau 34 par rapport au socle 31.

On obtient donc de ce fait le même effet de freinage que celui rappelé ci-dessus c'est-à-dire le freinage d'un déplacement d'une planche à voile quand elle est dans son élément naturel.

La figure 4 représente un troisième mode de réalisation d'un simulateur de planche à voile qui comporte, comme dans les modes de réalisation précédents, un socle 51 et un plateau 54 pouvant pivoter l'un par rapport à l'autre au moyen de galets 55 coopérant respectivement des chemins de roulement 56, 57 appartenant respectivement sur le socle 51 et sur le plateau 54.

Ce mode de réalisation, comme dans le premier mode de réalisation, selon les figures 1 et 2, comporte un socle 51 en forme de réceptacle pour contenir un fluide ayant un coefficient de viscosité. Mais en particulier pour ce mode de réalisation, le plateau 51 comporte sur sa surface intérieure 58 un engrenage 59 circulaire situé dans un plan perpendiculaire à l'axe de rotation 60 du plateau 54 par rapport au socle 51. Solidaires de ce plateau 54 sont situés deux portes-paliers 61, 62, qui supportent un axe 63 qui est disposé dans ceux-ci, de façon que sa direction 64 soit avantageusement d'un point de vue mécanique, perpendiculaire à l'axe 60 et de plus concourant avec ce dernier en un point 65. L'extrêmité 66 de cet axe 63 porte un deuxième engrenage 67, situé dans un plan perpendiculaire à l'axe 64 et agencé pour coopérer avec l'engrenage 59. Cet agencement est fait, de façon que, lorsque le plateau 54 est animé d'un mouvement de rotation autour de son axe 60, l'engrenage 59 coopère avec

*l'engrenage 67 pour transformer le mouvement de rotation du plateau 54 autour de son axe 60 en un mouvement de rotation de l'axe 63 autour de l'axe 64 perpendiculaire à l'axe 60.*

*Cet axe 63 supporte en plus, par exemple entre les deux portes-paliers 61, 62, une palette 68 apte à "barboter" en rotation dans le fluide visqueux 69 dont le niveau 70 peut être défini par le bord supérieur 71 du socle 51. Il n'a été illustrée qu'une seule palette 68, mais il est bien évident qu'un tel simulateur peut en comporter plusieurs.*

*Dans ces modes de réalisation illustrés ci-dessus, les mouvements de rotation des plateaux par rapport au socle sont favorisés par des paliers centraux et/ou des galets de roulement 13, 14, 45, 55. Mais il peut être avantageux, dans certains cas, de supprimer ces galets pour contribuer encore plus à réduire les coûts de production d'un tel simulateur.*

*La figure 5 permet une telle rotation avantageuse.*

*Dans ce mode de réalisation, le simulateur de planche à voile comporte un socle 100, d'un diamètre déterminé, constituant un réceptacle 102 pour contenir un fluide visqueux dont la quantité est déterminée par le niveau du bord supérieur 103. Il comporte, en outre, un plateau 104 en forme de cuvette renversée délimitée par un fond 105 et un bord latéral circulaire 106 d'un diamètre légèrement inférieur au diamètre intérieur du réceptacle 102 de façon que ce plateau 104 puisse pénétrer dans le réceptacle 102, de façon que le bord 103 du socle 101 entoure extérieurement le bord 106 du plateau 104.*

*Avantageusement, ce socle 100 et ce plateau 104 qui sont avantageusement de forme cylindrique de révolution, placés l'un dans l'autre suivant l'axe 107, peuvent être maintenus en regard l'un de l'autre au moyen d'un pilier ressort 108, centré sur l'axe 107. Ce mode de réalisation permet, du fait de l'existence du réceptacle 102, de contenir une certaine quantité de fluide visqueux, comme de l'eau. De ce fait, en plaçant le plateau 104 dans le socle 100, il est ainsi formé entre le niveau supérieur 109 du fluide visqueux et le fond*

105 du plateau 104, une chambre étanche 110 contenant de l'air. Cette chambre 110 constitue de ce fait un coussin d'air ou chambre d'air formant un ressort fluidique comme ceux que l'on trouve dans les amortisseurs. Le plateau 104 de ce fait est sustenté sur un matelas élastique de fluide compressible, il peut donc pivoter par rapport au socle 100 avec un minimum de frottement.

A cette chambre d'air élastique peut être ajouté l'effort élastique supplémentaire dû au ressort 108 qui est fixe par rapport au socle 100 mais qui coopère par une coupelle 111 et une bille de roulement 112·avec le plateau 104 pour permettre la rotation de ce plateau par rapport au socle 100. Le plateau 104 comporte sur son bord latéral 106 et tournées vers l'intérieur du réceptacle 102, des plaques 113, 114 solidaires du bord 106, comportant avantageusement des pluralités d'orifices 115. De ce fait quand le plateau 104 est animé d'un mouvement de rotation par rapport au socle 100 notamment grâce au moyen du coussin d'air, les plaques 113, 114 se déplacent dans le fluide en le laminant dans les orifices 115 pour obtenir l'amortissement de la rotation du plateau 104 par rapport au socle 100 et donc le freinage hydraulique explicité ci-avant.

Avantageusement pour éviter que des impuretés et autres graviers puissent pénétrer dans le réceptacle 102 par l'espace 116 compris entre les bords 103 et 106 respectivement du socle 100 et du plateau 104,un couvercle 117 à bords 118 recourbés d'un diamètre supérieur au bord 103 du socle 100 est fixé sur le plateau 104. Ce couvercle 117 pouvant comporter lui-même les moyens 120 pour supporter les moyens de rapport d'arrêt d'une voile de planche à voile.

0114142

## REVENDICATIONS

1) Simulateur de planche à voile comportant un socle (1) (31) (100) formant réceptacle (2) (32) (52) (102),
un plateau (4) (34) (54) (104) situé au dessus dudit socle, ledit plateau comportant des moyens pour recevoir un mât de voile (22),
des moyens de support et de roulement (13) (14) (10) (11)... dudit plateau par rapport audit socle autour d'un axe et des moyens pour freiner la rotation (16) (17) (43) (68) (113) (114) dudit plateau par rapport audit socle par friction d'un élément solide par rapport à un corps ayant un coefficient de viscosité déterminé.

2) Simulateur selon la revendication 1, caractérisé par le fait que lesdits moyens de support et roulement sont constitués respectivement par des chemins de roulement circulaires de révolution (10, 11) réalisés respectivement sur ledit socle et ledit plateau et une pluralité de galets (14, 14) apte à coopérer respectivement avec ces deux dits chemins de roulement.

3) Simulateur selon la revendication 1, caractérisé par le fait que lesdits moyens de support et de roulement sont constitués par un fluide (109) contenu dans le réceptacle (102) dudit socle (101), ledit plateau (104) formant couvercle disposé dans ledit réceptacle de manière à former une chambre d'air (110)entre le fond (105)dudit couvercle et la surface (109) dudit fluide dans ledit socle.

4) Simulateur selon la revendication 1, caractérisé par le fait que lesdits moyens pour freiner la rotation dudit plateau par rapport audit socle, comporte des palettes (16,17) des moyens pour entraîner en rotation lesdites palettes par la rotation dudit plateau par rapport audit socle, et un fluide disposé dans ledit réceptacle du socle, ledit fluide ayant un niveau tel que lesdites palettes en rotation coopèrent avec ledit fuide.

5) Simulateur selon la revendication 4, caractérisé par le fait que lesdits moyens pour entraîner en rotation lesdites palettes avec ledit plateau sont constitués par une liaison avec les moyens de roulement.

6)     *Simulateur selon revendication 4, caractérisé par le fait que lesdits moyens de liaison en rotation desdites palettes sont constitués par un ensemble d'engrenage (59, 69) reliant ledit plateau (54) à un axe de rotation (63)desdites palettes (68).*

7)     *Simulateur selon la revendication 1, caractérisé par le fait que les moyens pour freiner la rotation dudit plateau par rapport audit socle sont constitués par un ensemble de galets (44, 45) en rotation entre ledit socle (31) et ledit plateau (34) respectivement sur deux chemins de roulement (40, 41), respectivement sur ledit socle et ledit plateau et un matériau élastiquement déformable (43) disposé sur au moins l'un des deux chemins de roulement.*

0114142

FIG 1

FIG 2

**FIG 3**

**FIG 4**

**FIG 5**

Office européen
des brevets

**RAPPORT DE RECHERCHE EUROPEENNE**

0114142
Numéro de la demande

EP 84 40 0086

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-1 566 239 (CENTRE NATIONALE DE LA RECHERCHE SCIENTIFIQUE) <br> * figures 1,2; page 2, colonne de gauche, ligne 25 - fin de la colonne, colonne de droite, premières deux lignes * | 1,2 | G 09 B 9/06 |
| A | FR-A-1 500 889 (CENTRE NATIONALE DE LA RECHERCHE SCIENTIFIQUE) <br> * figures 3,4; page 2, colonne de gauche, dernières trois lignes, colonne de droite, lignes 1-38 * | 1,2 | |
| A | FR-A-2 504 710 (FERRI) <br> * figures I-III; page 2, lignes 8-27 * | 1,2 | |
| A | DE-A-2 756 085 (FRIEDRICH) <br> * figure 11; page 27, dernier paragraphe; pages 28,29 * | 1 | **DOMAINES TECHNIQUES RECHERCHES (Int. Cl. ³)** <br><br> G 09 B <br> B 63 B <br> A 63 B |
| A | EP-A-0 052 051 (BERGER) | | |

Le présent rapport de recherche a été établi pour toutes les revendications

| Lieu de la recherche <br> LA HAYE | Date d'achèvement de la recherche <br> 22-03-1984 | Examinateur <br> ALLEN E.F. |
|---|---|---|